# EUROPÄISCHE PATENTANMELDUNG

(11) **EP 2 154 010 A1**
(43) Veröffentlichungstag der Anmeldung: **17.02.2010**
(21) Anmeldenummer: 09177786.2
(22) Anmeldetag: 16.04.2008
(51) Int. Cl.: B60D 1/14, A01B 59/043

(54) **Lenkervorrichtung für eine Dreipunkt-Anhängevorrichtung**

(30) Priorität: 20.04.2007 DE 102007019129
(62) Teilanmeldung aus: 08154614.5
(71) Anmelder: DEERE & COMPANY, Moline, Illinois 61265-8098 (US)
(72) Erfinder: Heitlinger, Martin, 76684 Östringen (DE); Teich, Michael, 68199 Mannheim (DE)
(74) Vertreter: Reichert, Christian

(57) **Zusammenfassung**

Es wird eine Lenkervorrichtung (17) für eine Dreipunkt-Anhängevorrichtung (10) einer landwirtschaftlichen Maschine vorgeschlagen. Die Lenkervorrichtung (17) umfasst einen über ein Schwenkgelenk verschwenkbar an einen Anbaurahmen (12) anlenkbaren Lenker (18), wobei der Lenker (18) wenigstens um eine erste Achse in eine erste und in eine zweite entgegen gesetzte Schwenkrichtung verschwenkbar ist, und wenigstens ein Federelement, welches einenends mit dem Lenker (18) verbunden ist. Um die Handhabung des Lenkers (18), zu vereinfachen wird vorgeschlagen, dass das erste Federelement anderenends ortsfest am Anbaurahmen (10) befestigbar ist, wobei das erste Federelement einenends derart mit dem Lenker verbunden ist, dass der Lenker (18) in eine vorgebbare Mittenschwenkstellung gedrängt bzw. in einer solchen gehaltenen wird.

## Beschreibung

Die Erfindung betrifft eine Lenkervorrichtung (17) für eine Dreipunkt-Anhängevorrichtung einer landwirtschaftlichen Maschine, mit einem über ein Schwenkgelenk verschwenkbar an einen Anbaurahmen angelenkten Lenker, wobei der Lenker wenigstens um eine Achse in eine erste und in eine zweite entgegen gesetzte Schwenkrichtung verschwenkbar ist, und wenigstens einem ersten Federelement, welches einenends mit dem Lenker verbunden ist.

Dreipunkt-Anhängevorrichtungen an landwirtschaftlichen Maschinen, wie beispielsweise landwirtschaftliche Schlepper oder Laderfahrzeuge, werden eingesetzt, um Arbeitsgeräte anzuhängen, die von der Maschine getragen oder gezogen werden. Derartige Dreipunkt-Anhängevorrichtungen sind bekannt und weisen drei Koppelpunkte auf, die in der Regel durch zwei Unterlenker und einem Oberlenker gebildet werden, wobei diese mit Fanghaken versehen sind, an die das Arbeitsgerät gekoppelt wird. Das Ankoppeln des Geräts erfolgt meist durch Heranfahren des Schleppers oder Zugfahrzeugs an das Gerät und Anheben der Unterlenker, nachdem eine ungefähre Annäherungsposition erreicht ist. Die Verbindung zwischen dem Oberlenker und dem oberen Koppelpunkt erfolgt meist von Hand durch eine Bedienperson, die entweder durch Bewegen bzw. Verschwenken des Oberlenkers und/oder durch Anheben der schon angekoppelten Unterlenker versucht, eine geeignete Koppelstellung für den Oberlenker zum Anlenken des Geräts an seinem oberen Anlenkpunkt zu erzielen, um diesen dann von Hand abzusenken. Eine derartige Anordnung ist beispielsweise in der DE 26 08 276 A1 offenbart.

Insbesondere die Oberlenker sind oftmals hydraulisch längenverstellbar ausgebildet und nehmen aufgrund immer schwerer werdender Geräte und höherer erforderlicher Zugkräfte immer größere Ausmaße an, womit das Gewicht eines Oberlenkers zunimmt und die Handhabung erschwert wird. Es wurden daher Anstrengungen unternommen, insbesondere die Handhabung des Oberlenkers beim Ankoppeln eines Geräts für die Bedienperson zu erleichtern.

Die DE 38 12 198 A1 offenbart eine Dreipunkt-Anhängevorrichtung für einen landwirtschaftlichen Schlepper mit zwei Unterlenkern, die über eine mittels einem Kraftantrieb verstellbare Hubstangenanordnung zum Anheben der Unterlenker, und über mit der Hubstangenanordnung verbundene Halterungen mit dem Oberlenker verbunden sind. Die Halterungen sind beidseitig des Oberlenkers jeweils mit Federelementen verbunden, die einenends an den Halterungen und anderenends am Oberlenker angreifen. Die Federelemente halten den Oberlenker in einer Mittenposition gegenüber den Halterungen und gleichzeitig in einer Grundposition bezüglich einer Schwenkrichtung vertikal zur Anhängevorrichtung bzw. zum Schlepper. Durch Verstellen der Hubstangen bzw. der Halterungen und den Federelementen wird der Oberlenker zusammen mit den Unterlenkern bewegt. Bei Außerbetriebnahme des Oberlenkers bzw. bei Arbeiten mit dem Schlepper, bei denen der Oberlenker in eine Außerbetriebsstellung gebracht werden soll gestaltet sich die hier offenbarte Anordnung als umständlich und unpraktikabel, da das Lösen des Oberlenkers von den Halterungen mit einigem Bedienungsaufwand verbunden ist. Gleichermaßen gilt dies für das Wiedereinrichten einer Betriebsstellung des Oberlenkers. Ferner ist die Anordnung der Federelemente anfällig gegenüber Gegenständen, die bei Feldarbeiten in einen inneren Bereich der Anhängevorrichtung hineingeraten.

Die der Erfindung zugrunde liegende Aufgabe wird darin gesehen, eine Lenkervorrichtung der eingangs genannten Art anzugeben, durch welche einige oder alle der vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird eine Lenkervorrichtung der eingangs genannten Art derart ausgebildet, dass das erste Federelement anderenends ortsfest am Anbaurahmen befestigt ist, wobei das erste Federelement einenends derart mit dem Lenker verbunden ist, dass ein Verschwenken des Lenkers um die eine Achse in beide Schwenkrichtungen eine Längenänderung des Federelements hervorruft. Dadurch, dass das Federelement ortsfest an den Anbaurahmen befestigbar ist, entfallen aufwändige Maßnahmen, die durchzuführen sind, wenn der Lenker in eine Außerbetriebsstellung gebracht wird. Das oder die Federelemente können platzsparend und kompakt angeordnet werden, so dass sie nicht durch Gegenstände, die in den inneren Bereich der Anhängevorrichtung hineinragen, beschädigt werden können. Ferner gestattet es diese Ausführungsform, dass der Lenker beim Verschwenken in Vertikalrichtung einer Anhängevorrichtung, also aufwärts oder abwärts, unter Einwirkung einer Federkraft verschwenkt wird, wobei die Federkraft je nach Schwenkrichtung sich unterstützend oder entgegenwirkend auswirken kann. Am Lenker ist ein Verbindungsglied vorgesehen ist, vorzugsweise ein Verbindungsauge, mit welchem der Lenker an ein Schwenkgelenk schwenkbar angelenkt ist. Die Befestigung des Lenkers kann beispielsweise durch einen ein Schwenkgelenk bildenden Schwenkbolzen erfolgen, der an am Anbaurahmen ausgebildeten Aufnahmelagern geführt wird und mit dem Lenker über das Verbindungsglied verbunden ist. Die Aufnahmelager für den Schwenkbolzen können jedoch auch am Lenker ausgebildet sein, so dass der Bolzen ein am Anbaurahmen ausgebildetes Verbindungsauge aufnimmt. Das Verbindungsglied kann ebenfalls als Verbindungsflansch oder Verbindungszapfen oder als Schraubverbindung ausgebildet sein. Es ist auch möglich den Lenker durch andere Mittel mit dem Schwenkgelenk zu verbinden, beispielsweise mit einer Schweißverbindung, die den Lenker mit dem Bolzen verbindet. Weitere Möglichkeiten bestehen darin, den Bolzen direkt am Lenker auszubilden, beispielsweise als Gussteil oder als Schmiedeteil.

Das wenigstens eine Federelement kann als Schraubenfeder ausgebildet, welche einenends mit dem Lenker und anderenends derart mit einem Anbaurahmen verbindbar ist, dass ein Verschwenken des Lenkers um die erste Achse in beide Schwenkrichtungen eine Längenänderung der Schraubenfeder hervorruft. Auch hier ist es denkbar eine andere Art von Federelement einzusetzen, beispielsweise einen Elastomer.

Das Schwenkgelenk ist vorzugsweise derart ausgebildet, dass der Lenker um die erste Achse und um eine zweite Achse in jeweils eine erste und eine zweite entgegengesetzte Schwenkrichtung verschwenkbar ist. Die Anordnung des Schwenkgelenks ist vorzugsweise derart gewählt, dass der Lenker bei Anlenkung an einen Anbaurahmen in Querrichtung zu diesem, also seitlich in beide Richtungen und in Vertikalrichtung, also aufwärts und abwärts verschwenkbar ist. Dazu eignen sich Schwenklager, die als Kreuzgelenke oder Kardangelenke ähnliche Anordnungen oder auch als Kugelgelenke ausgebildet sind und über wenigstens zwei Schwenkfreiheitsgrade verfügen. Beispielsweise umfasst das Schwenkgelenk einen Gabelkopf, der einenends über die erste Achse mit dem Lenker verbunden und anderenends über die zweite Achse mit einem Anbaurahmen verbindbar ist. Die erste Achse kann beispielsweise durch einen Bolzen ausgebildet sein, der an Aufnahmelager an den Endbereichen des Gabelkopfs gehalten wird und mit dem Verbindungsglied des Lenkers verbunden ist. Die zweite Achse kann durch einen weiteren Bolzen gebildet werden, der durch eine am Gabelkopf ausgebildete Bohrung geführt wird und über Aufnahmelager am Anbaurahmen aufgenommen werden kann. Die beiden Bolzen sind dabei entsprechend der Vorzugsschwenkrichtungen eines Lenkers an einer Anhängevorrichtung senkrecht zueinander ausgerichtet. Selbstverständlich gilt auch hier eine umgekehrte Anordnung des Gabelkopfes bzw. der Bolzen. Das wenigstens eine Federelement kann als Schraubenfeder ausgebildet sein, welche einenends mit dem Lenker und anderenends derart mit dem Anbaurahmen verbunden ist, dass ein Verschwenken des Lenkers um die erste Achse in beide Schwenkrichtungen oder ein Verschwenken des Lenkers um die zweite Achse in beide Schwenkrichtungen eine Längenänderung der Schraubenfeder hervorruft, so dass der Lenker in eine vorgebbare Mittenschwenkstellung um die erste Achse und um eine vorgebbare Schwenkstellung um die zweite Achse gedrängt bzw. in einer solchen gehaltenen wird. Diese Ausführungsform ist vorzugsweise für die Ausgestaltung der Lenkervorrichtung mit zwei Schwenkachsen vorgesehen und gestattet es, dass der Lenker zum einen beim Verschwenken um die erste Achse, beispielsweise beim Verschwenken in Querrichtung einer Anhängevorrichtung, also bei seitwärts gerichtetem Verschwenken, unter Einwirkung einer längenänderungsbedingten Federkraft verschwenkt wird, wobei die Federkraft den Lenker in die Mittenstellung zurückdrängt. Zum anderen wird der Lenker beim Verschwenken um die zweite Achse, beispielsweise beim Verschwenken in Vertikalrichtung einer Anhängevorrichtung, also bei aufwärts oder abwärts gerichtetem Verschwenken, unter Einwirkung einer längenänderungsbedingten Federkraft verschwenkt, wobei die Federkraft je nach Schwenkrichtung sich unterstützend oder entgegenwirkend auswirken kann. Die Mittenschwenkstellung ist in der Regel geometrisch vorgegeben und stellt sich ein, wenn der Lenker in Querrichtung mittig zur Anhängevorrichtung ausgerichtet ist. Die Schwenkstellung in Vertikalrichtung der Anhängevorrichtung stellt sich hingegen durch ein an der entsprechenden Schwenkachse des Lenkers wirkendes Momentengleichgewicht ein, wobei das durch die Federkraft aufgebrachte Moment einem durch die Gewichtskraft des Lenkers aufgebrachten Moment entgegenwirkt.

Der Lenker ist vorzugsweise als Oberlenker ausgebildet, insbesondere als hydraulisch längenverstellbarer Oberlenker. Ein derart verstellbarer Oberlenker kann durch einen Hydraulikzylinder realisiert werden, der stangenseitig und bodenseitig angeordnete Anlenkpunkte bzw. Verbindungsmittel aufweist. Der Lenker kann jedoch auch als mechanisch längenverstellbarer Oberlenker ausgebildet sein, beispielsweise über eine mit einer Spindelanordnung oder mit einer abstufbaren Steckverbindung versehenen Strebe.

Vorzugsweise ist das wenigstens eine Federelement einenends über eine Lasche mit dem Lenker verbunden, wobei die Lasche derart ausgebildet ist, dass ein erster Verbindungspunkt, in welchem die Lasche mit dem Lenker dreh- und ortsfest verbunden ist, und ein zweiter Verbindungspunkt, in welchem die Lasche mit dem Federelement verbunden ist, vorgesehen ist und wobei die erste Achse zwischen dem ersten und dem zweiten Verbindungspunkt liegt. Dadurch, dass die erste Achse, also in diesem Fall die Schwenkachse um die der Lenker seitwärts verschwenkbar ist, zwischen dem ersten und dem zweiten Verbindungspunkt gelegen ist, baut die Federkraft ein Moment um die erste Achse auf, das dem Moment entgegenwirkt, welches durch die Gewichtskraft des Lenkers erzeugt wird.

In einer weiteren Ausführungsform kann das wenigstens eine Federelement einenends über eine Lasche mit dem Lenker verbunden sein, wobei die Lasche derart ausgebildet ist, dass ein erster Verbindungspunkt, in welchem die Lasche mit dem Lenker drehbar verbunden ist, ein zweiter Verbindungspunkt, in welchem die Lasche mit dem Federelement verbunden ist und ein dritter Verbindungspunkt, in welchem die Lasche mit dem Schwenkgelenk drehbar verbunden ist, vorgesehen ist und wobei die erste Achse zwischen dem zweiten und dem dritten Verbindungspunkt liegt. Dadurch, dass ein dritter Verbindungspunkt vorgesehen ist, in dem die Lasche mit dem Schwenkgelenk drehbar verbunden ist, und dadurch, dass die erste Achse, also in diesem Fall ebenfalls die Schwenkachse um die der Lenker seitwärts verschwenkbar ist, zwischen dem zweiten und dem dritten Verbindungspunkt gelegen ist, wird eine Momenthebelübersetzung geschaffen, durch die der Momenthebel, an dem die Federkraft angreift, vergrößert werden kann, so dass die Federkraft ein größeres Moment um die erste Achse aufbaut, das dem Moment entgegenwirkt, welches durch die Gewichtskraft des Lenkers erzeugt wird. Dadurch kann ein Federelement mit geringerer Federkraft bei gleichbleibender Wirkung eingesetzt werden.

In einer weiteren Ausführungsform ist ein zweites Federelement vorgesehen, welches vorzugsweise als Federbiegestab ausgebildet ist. Das zweite Federelement ist einenends mit dem Lenker und anderenends derart mit dem Schwenkgelenk verbunden ist, dass ein Verschwenken des Lenkers um die erste Achse in beide Schwenkrichtungen ein Auslenken des Federelements aus seiner Neutralstellung hervorruft. Das zweite Federelement kann als Federbiegestab ausgebildet sein, der einenends mit dem Lenker und anderenends derart mit dem Schwenkgelenk verbunden ist, dass ein Verschwenken des Lenkers um die erste Achse in beide Schwenkrichtungen ein Auslenken des Federbiegestabs aus seiner Neutralstellung hervorruft. Der Federstab kann einenends an den Lenker, beispielsweise an die Wandung eines Hydraulikzylinders, und anderenends an das Schwenkgelenk, beispielsweise an einen Schenkel des Gabelkopfs, angeschweißt sein, so dass der Gabelkopf des Schwenkgelenks nur durch Verbiegen des Federstabs gegenüber dem Lenker verschwenkt werden kann. Der Federstab ist vorzugsweise aus einem Federstahl ausgebildet und weist eine Elastizität auf, die ausreichend hoch ist, um einen maximalen Auslenkweg beim Verschwenken des Lenkers aufzunehmen. Gleichzeitig weist er jedoch auch eine ausreichend hohe Steifigkeit bzw. Federkraft auf, um den Lenker in eine voreingestellte Schwenkstellung, vorzugsweise in eine zentrale Schwenkstellung bzw. Mittenschwenkstellung zu halten bzw. beim Verschwenken in eine solche zurückzudrängen. Es ist aber auch denkbar andere Arten von Federelementen einzusetzen, beispielsweise eine Schraubenfeder oder eine Spiralfeder, die entsprechend angeordnet sind, dass der Lenker gegenüber dem mit dem Lenker verbundenen Teil des Schwenkgelenks nur entgegen einer Federkraft verschwenkbar ist.

Am Lenker oder am Schwenkgelenk können ferner Begrenzungsmittel vorgesehen sein, die den Verschwenkweg des Lenkers um die erste Achse in die erste und/oder zweite Schwenkrichtung begrenzen. Vorzugsweise sind die Begrenzungsmittel als Anschlag bzw. Anschläge ausgebildet. Ein derartiger Anschlag kann beispielsweise durch ein am Lenker angeschweißtes Bauteil erfolgen, welches beim Verschwenken des Lenkers seinen Abstand zu einen Bereich am Gelenk oder zum Anbaurahmen verkürzt und bei Erreichen des maximalen Verschwenkweges entsprechend anschlägt und den Verschwenkweg dadurch begrenzt. In gleicher Weise kann ein derartiges Bauteil auch an einen Bereich am Gelenk oder am Anbaurahmen angebracht sein. Derartige Anschläge können starr oder nachgiebig, also federnd, angeordnet werden. Sie können ferner auch als Spiralfedern ausgebildet sein, die mit einem abzufedernden Lenker beim Verschwenken in Kontakt treten und den Verschwenkweg eingrenzen.

Eine erfindungsgemäße Lenkervorrichtung eignet sich insbesondere für den Anbau an eine Dreipunkt-Anhängevorrichtung einer landwirtschaftlichen Maschine bzw. für die Kombination mit einer solchen Anbauvorrichtung. Die Dreipunkt-Anhängevorrichtung weist einen Anbaurahmen auf, an dem eine Lenkervorrichtung der oben beschriebenen Art angebracht bzw. angelenkt bzw. mit dem eine derartige Lenkervorrichtung verbunden ist. Eine derartige Dreipunkt-Anbauvorrichtung weist in der Regel zwei Unterlenker auf, die an dem Anbaurahmen schwenkbar befestigt sind und zusammen mit einem oberhalb der Unterlenker schwenkbar am Anbaurahmen angelenkten Oberlenker eine Dreipunktanhängung eines landwirtschaftlichen Geräts ermöglichen.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine schematische Seitenansicht einer Dreipunkt-Anhängevorrichtung mit einer erfindungsgemäßen Lenkervorrichtung,
- Fig. 2: eine schematische perspektivische Ansicht der Dreipunkt-Anhängevorrichtung aus Figur 1 von oben,
- Fig. 3: eine schematische perspektivische Ansicht der Dreipunkt-Anhängevorrichtung aus Figur 1 von unten,
- Fig. 4: eine schematische Seitenansicht der Lenkervorrichtung aus Figur 1 und
- Fig. 5: eine schematische Seitenansicht einer Dreipunkt-Anhängevorrichtung mit einer erfindungsgemäßen Lenkervorrichtung in einer alternativen Ausführungsform.

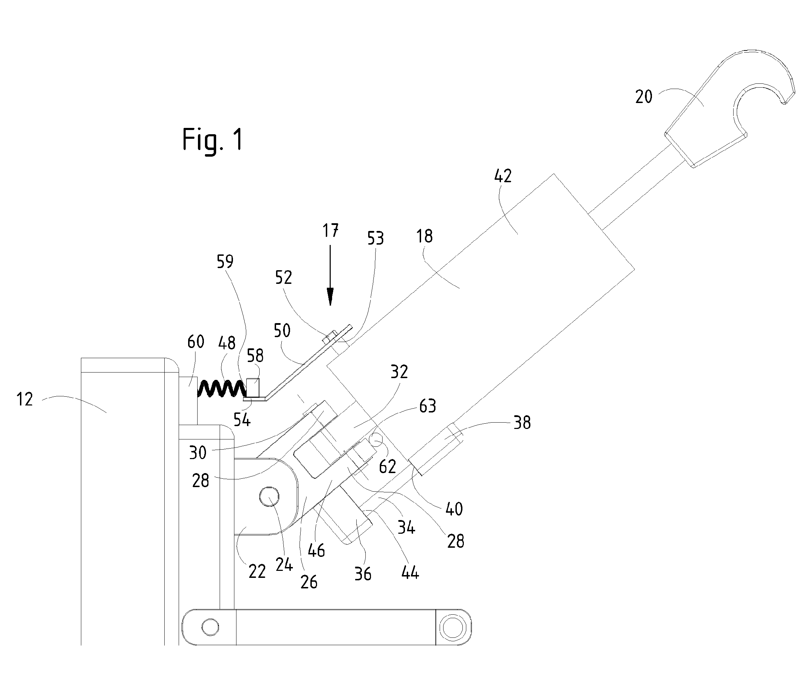

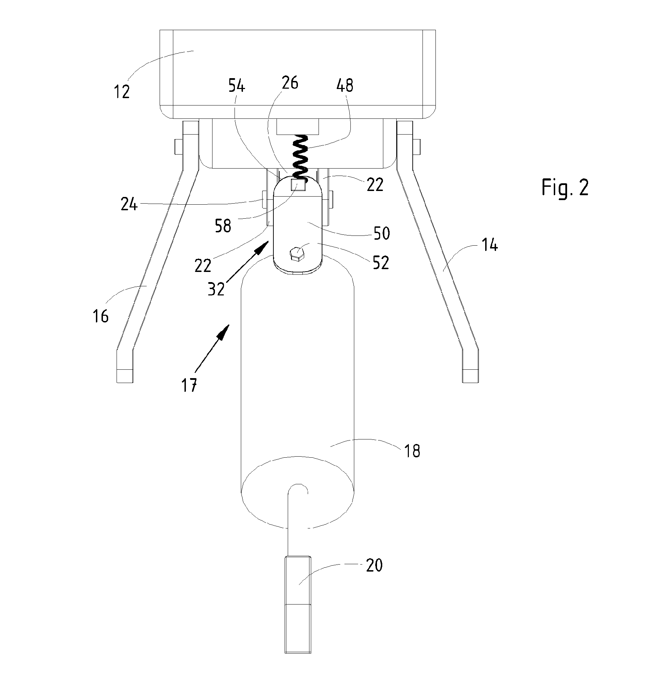

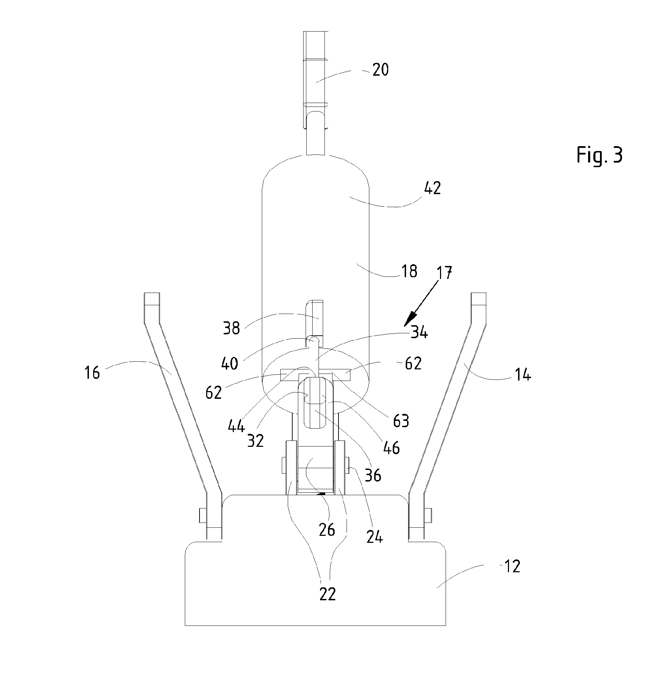

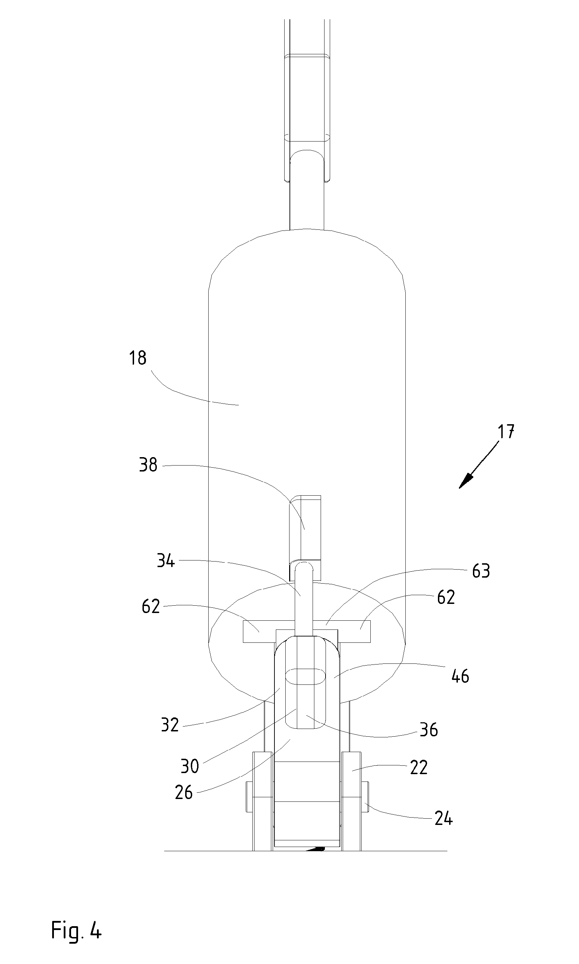

Die Figuren 1 bis 4 stellen Teile einer Dreipunkt-Anhängevorrichtung 10 für eine landwirtschaftliche Maschine, beispielsweise für einen Schlepper oder Traktor dar.

Die Dreipunkt-Anhängevorrichtung 10 umfasst einen Anbaurahmen 12, an dem ein rechter und eine linker Unterlenker 14, 16, sowie eine darüber angeordnete Lenkervorrichtung 17 angelenkt ist. Die Unterlenker 14, 16 sind üblicherweise mit nicht dargestellten Stabilisierungsstreben und Aktoren, welche beispielsweise als Hydraulikzylinder ausgebildet sind, verbunden.

Der Anbaurahmen 12 kann durch einen Teil eines Fahrzeugrahmens der landwirtschaftlichen Maschine ausgebildet, oder mit einem solchen verbunden sein.

Die Lenkervorrichtung 17 umfasst einen Oberlenker 18, der vorzugsweise als Hydraulikzylinder ausgebildet und in seiner Länge verstellbar ist. An seinem freien Ende ist ein Fanghaken 20 ausgebildet, mit dem er an einem oberen Anschlusspunkt eines landwirtschaftlichen Gerätes angekoppelt werden kann. An Stelle des hydraulischen Oberlenkers 18 kann selbstverständlich auch ein elektrisch oder rein mechanisch längenverstellbarer Lenker, beispielsweise durch eine Spindelanordnung, vorgesehen sein.

Der Anbaurahmen 12 weist zwei Befestigungslaschen 22 auf, die mittig zwischen den beiden Unterlenkern 14, 16 an einer oberen Position angeordnet sind. Die Befestigungslaschen 22 weisen Bohrungen auf in denen ein Bolzen 24 aufgenommen ist. Der Bolzen 24 ist in Querrichtung zur Anhängevorrichtung 10 ausgerichtet. Auf dem Bolzen 24 ist ein Gabelkopf 26 schwenkbar aufgenommen. Der Gabelkopf 26 weist zwei Gabelungsenden 28 auf, in denen ein zweiter Bolzen 30 gelagert ist. Der Bolzen 30 ist derart ausgerichtet, dass seine Längsachse zu einer vertikal und mittig zur Anhängevorrichtung 10 ausgerichteten Vertikalschwenkebene ausgerichtet ist. Der Gabelkopf 26 ist somit um den Bolzen 24 derart verschwenkbar angeordnet, dass der Bolzen 30 in der Vertikalschwenkebene verschwenkbar ist.

Der Oberlenker 18 umfasst ein an seinem unteren Ende angeordnetes Verbindungsauge 32, welches von dem Bolzen 30 aufgenommen wird. Der Oberlenker 18 ist somit über den in Querrichtung angeordneten Bolzen 24 und über den Gabelkopf 26 in vertikaler Richtung nach oben oder nach unten verschwenkbar gelagert. Zusätzlich ist er über den in Vertikalschwenkebene ausgerichteten Bolzen 30 und über das Verbindungsauge 32 in Querrichtung zur Anhängevorrichtung 10, also zu beiden Seiten in Richtung der Unterlenker 14, 16 verschwenkbar gelagert. Die Verbindung zwischen Oberlenker 18 und Anbaurahmen 12 wird somit über die beiden Bolzen 24 und 30 sowie über den Gabelkopf 26 hergestellt, die in Kombination miteinander ein Kreuzgelenk bzw. ein Schwenkgelenk mit zwei Freiheitsschwenkgraden bilden, welches über die Befestigungslaschen 22 und dem Verbindungsauge 32 zwischen Oberlenker 18 und Anbaurahmen 12 angeordnet ist. Der Oberlenker 18 ist damit in Vertikalrichtung, also aufwärts und abwärts, und in Querrichtung also seitwärts, verschwenkbar angeordnet.
Um die Handhabung des Oberlenkers 18 zu vereinfachen, der aufgrund seiner Ausbildung als Hydraulikzylinder unter Umständen ein sehr hohes Gewicht einnimmt und oftmals nur mit großem Kraftaufwand in eine gewünschte Position positioniert werden kann, sind verschiedene Hilfsmittel angeordnet, die den Verschwenkweg des Oberlenkers 18 bedienerfreundlich einschränken bzw. die Bedienung bei der Positionierung unterstützen können, wie im Folgenden näher erläutert wird.

Die Lenkerranordnung 17 umfasst einen als Biegestab 34 ausgebildetes Federelement, das sich zwischen dem Oberlenker 18 und dem Gabelkopf 26 erstreckt. Der Biegestab 34 ist aus einem zylindrischen Federstahl ausgebildet und über zwei Abstandsblöcke 36, 38 an seinem einen Ende 40 an das Gehäuse 42 des als Hydraulikzylinder ausgebildeten Oberlenkers 18 angeschweißt. An seinem anderen Ende 44 ist der Biegestab 34 an einen der Gabelarme 46 des Gabelkopfes 26 angeschweißt. Er ist somit einenends fest mit dem Oberlenker 18 und anderenends fest mit dem Gabelkopf 26 verbunden. Der Oberlenker 18 ist dabei derart positioniert, dass er eine Mittenschwenkstellung einnimmt und seitlich mittig, also zentral zu den beiden seitlich angeordneten Unterlenkern 14, 16 ausgerichtet ist. Der Gabelkopf 26 ist über den Bolzen 30 ebenfalls mittig zu den beiden Unterlenkern 14, 16 befestigt und nur in Vertikalrichtung verschwenkbar. Durch die Anordnung des Biegestabs 34 wird der Oberlenker 18 somit in einer Neutralfederstellung des Biegestabs 34 gehalten. Wird der Oberlenker 18 nun aus seiner Mittenschwenkstellung seitlich verschwenkt, dann verbiegt sich der Biegestab 34 entsprechend und bringt eine Federkraft auf, die den Oberlenker 18 in seine Mittenschwenkstellung zurückdrängt. Die Federkraft wird dabei mit zunehmendem Verschwenkweg, also mit zunehmender seitlicher Auslenkung des Biegestabs 34 stärker. Der Biegestab 34 dient somit als Positionierhilfe für den Oberlenker 18 und hält diesen in einer zentralen Position gegenüber der Anhängevorrichtung 10.

Als weitere Positionierhilfe ist an der Lenkervorrichtung 17 ein als Schraubenfeder 48 oder Zugfeder ausgebildetes Federelement vorgesehen. Die Schraubenfeder 48 erstreckt sich zwischen dem Anbaurahmen 12 und einer Befestigungslasche 50, die an das Gehäuse 42 des als Hydraulikzylinder ausgebildeten Oberlenkers 18 befestigt ist. Die Schraubenfeder 48 kann anstatt an den Anbaurahmen 12 ebenso direkt an den Fahrzeugrahmen der landwirtschaftlichen Maschine befestigt werden. Die Schraubenfeder 48 ist vorzugsweise derart ausgerichtet, dass ihre Längsachse, wie auch die Längsachse des Bolzens 30, zu der vertikal und mittig zur Anhängevorrichtung 10 ausgerichteten Vertikalschwenkebene ausgerichtet ist. Die Befestigungslasche 50 ist einenends über eine Verschraubung 52, welche einen dreh- und ortsfesten Verbindungspunkt 53 (siehe Figur 1) zwischen Befestigungslasche 50 und Oberlenker 18 darstellt, an das Gehäuse 42 angeschraubt. Alternativ kann hier auch eine andere Art des Verbindens, beispielsweise durch Verschweißen, vorgenommen werden. Ferner weist die Befestigungslasche 50 anderenends ein mit der Schraubenfeder 48 verbundenes Ende 54 auf, an dem ein Befestigungszapfen 58 als Verbindungspunkt 59 zwischen Schraubenfeder 48 und Befestigungslasche 50 vorgesehen ist. Ein weiterer Befestigungszapfen 60 ist entsprechend am Anbaurahmen 12 bzw. am Fahrzeugrahmen vorgesehen, so dass die Schraubenfeder 48 zwischen den beiden Befestigungszapfen 58, 60 gespannt ist. Die Anordnung ist so gewählt, dass der Bolzen 30 bzw. die Längsachse des Bolzens 30, also die Schwenkachse um die der Oberlenker 18 seitlich verschwenkbar ist, zwischen dem Verbindungspunkt 59, in welchem die Schraubenfeder 48 und die Befestigungslasche 50 verbunden sind, und dem Verbindungspunkt 53, in welchem die Befestigungslasche 50 und der Oberlenker 18 verbunden sind, gelegen ist. Die Schraubenfeder 48 weist dann eine erste Federkomponente auf die in Vertikalschwenkrichtung des Oberlenkers 18 wirkt. Wird der Oberlenker 18 in vertikale Richtung nach oben oder unten verschwenkt, so erfährt die Schraubenfeder 48 eine Längenänderung, woraufhin eine Änderung der Federkraft der ersten Federkomponente auf den Oberlenker 18 wirkt. Der Oberlenker 18 wird durch die Federkraft der ersten Federkomponente in einer Grundschwenkstellung in vertikaler Schwenkrichtung gegenüber der Anhängevorrichtung 12 gehalten und zwar in der Stellung, die sich durch ein durch die Federkraft der ersten Federkomponente und die Gewichtskraft des Oberlenkers 18 hergestelltes Momentengleichgewicht um den Bolzen 24 einstellt. Die Wirkung der ersten Federkomponente ist derart, dass bei Abwärtsverschwenken des Oberlenkers die Federkraft entgegenwirkt und den Oberlenker 18 nach oben zieht. Ein entgegen gerichtetes Verschwenken bewirkt, dass die den Oberlenker 18 haltende Federkraft sich reduziert und die Gewichtskraft des Oberlenkers 18 diesen nach unten zieht. Eine zweite Federkomponente tritt auf, sobald der Oberlenker 18 aus seiner Mittenschwenkstellung seitlich verschwenkt wird. Durch das seitliche Verschwenken des Oberlenkers 18 wird der sich am Verbindungspunkt 59 befindliche Befestigungszapfen 58 verschoben und wandert aus der Vertikalschwenkebene heraus. Dies verursacht eine Längenänderung der Schraubenfeder 48 und damit eine Federkraft, woraufhin eine Hebelwirkung bzw. ein Federkraftmoment um den Bolzen 30 bzw. um seine Schwenkachse geschaffen wird. Gleichzeitig erfährt der Schwerpunkt des Oberlenkers 18 eine Verschiebung, so dass sich eine weitere durch die Gewichtskraft des Oberlenkers 18 hervorgerufene Hebelwirkung bzw. ein Gewichtskraftmoment um den Bolzen 30 einstellt. Die Position des Befestigungszapfens 58 und damit die Länge der Befestigungslasche 50 ist so gewählt, dass bei seitlichem Verschwenken des Oberlenkers 18 das Federkraftmoment dem Gewichtskraftmoment entgegenwirkt, so dass der Oberlenker 18 zurück in seine Mittenschwenkstellung gedrängt wird.

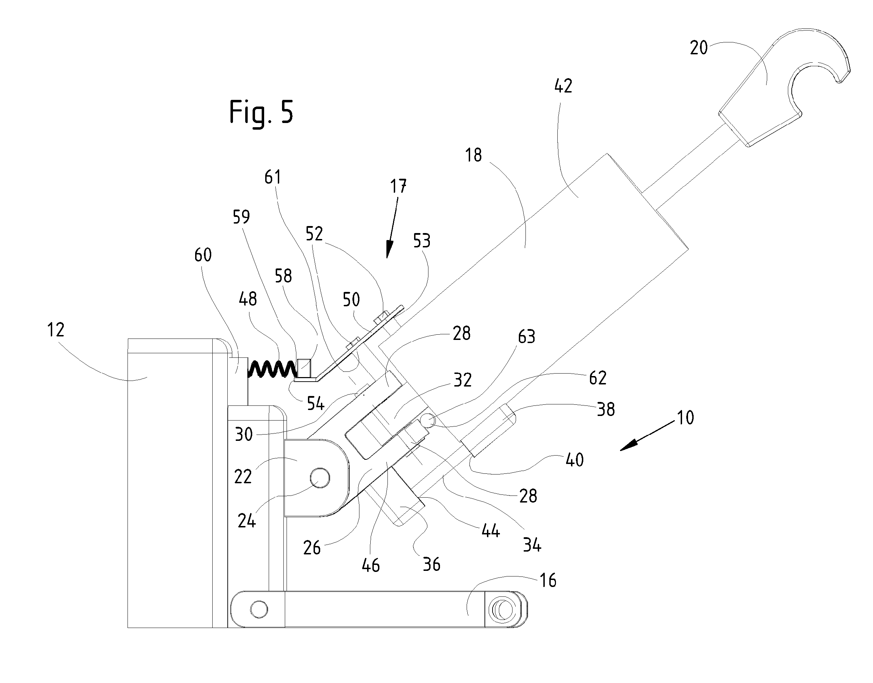

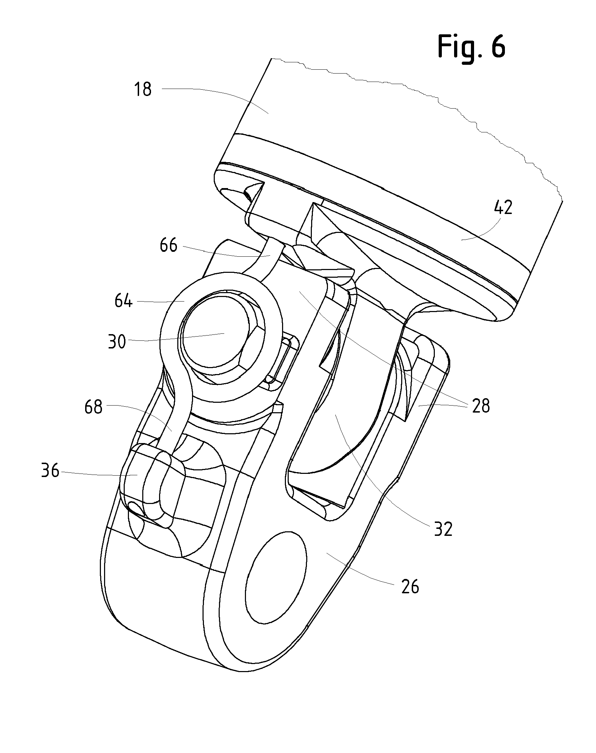

Um die Federkraftwirkung zu erhöhen ist eine alternative Ausführungsform für die Befestigungslasche 50 vorgeschlagen, wie in Figur 5 dargestellt ist. Hierbei ist ein weiterer Verbindungspunkt 61 vorgesehen, in welchem die Befestigungslasche 50 mit dem Schwenkgelenk, vorzugsweise mit dem Gabelkopf 26 des Schwenkgelenks, und zwar im Bereich einer der Gabelungsenden 28, drehbar gelagert ist, wobei der zuletzt genannte Verbindungspunkt 61 zwischen den beiden oben genannten Verbindungspunkten 53, 59 angeordnet ist. In diesem Fall weist dann auch der Verbindungspunkt 53, in welchem die Befestigungslasche 50 mit dem Oberlenker 18 verbunden ist, eine drehbare Verbindung mit dem Oberlenker 18 auf, so dass die Befestigungslasche 50 bei seitlichem Verschwenken des Oberlenkers 18 ebenfalls seitlich verschwenkt wird. Da sich die Abstände zwischen den beiden drehbaren Verbindungen in den Verbindungspunkten 61 und 53 bei Verschwenken des Oberlenkers 18 leicht ändern, sollte für ein entsprechendes Spiel in den Verbindungen gesorgt sein (beispielsweise durch ein Langloch in der Befestigungslasche 50 (nicht gezeigt)). Bei Verschwenken des Oberlenkers 18 wird nun über die drehbare Verbindung in dem Verbindungspunkt 61 eine Vergrößerung des Momenthebels, an dem die Federkraft der Schraubenfeder 48 wirkt, erzielt, so dass bei gleicher Federkraft ein größeres Rückstellmoment auf den Oberlenker 18 wirkt. Für die gleiche Rückstellwirkung wie im obigen Ausführungsbeispiel zu Figur 1, kann auf diese Weise mit geringeren Federkräften gearbeitet werden. Wie in Figur 5 dargestellt ist, sollte der Bolzen 30 derart angeordnet sein, dass dieser zwischen dem Verbindungspunkt 59, in welchem die Schraubenfeder 48 mit der Befestigungslasche 50 verbunden ist, und dem Verbindungspunkt 61, in welchem die Befestigungslasche mit dem Gabelkopf 26 verbunden ist, gelegen ist, so dass auch der Verbindungspunkt 61, in welchem die Befestigungslasche 50 drehbar mit dem Gabelkopf 26 verbunden ist, zwischen dem Bolzen 30 und dem Verbindungspunkt 53, in welchem die Befestigungslasche 50 drehbar mit dem Oberlenker 18 verbunden ist, gelegen ist.

Als weitere Maßnahme, die eine Handhabung des Oberlenkers unterstützt, sind Anschläge 62 vorgesehen, die das seitliche Verschwenken des Oberlenkers 18 und damit auch eine seitliche Auslenkung des Biegestabs 34 (sofern ein Biegestab 34 vorgesehen ist) beschränken. Dazu ist an das Ende des Gabelarms 46 des Gabelkopfs 26 ein Rundstab 63 aufgeschweißt, der einen maximalen Verschwenkweg für das seitliche Verschwenken des Oberlenkers 18 festlegt. Wird der maximale Verschwenkweg durch seitliches Verschwenken des Oberlenkers 18 ausgeführt, so schlägt der Boden des Gehäuses 42 des als Hydraulikzylinder ausgebildeten Oberlenkers 18 gegen die Anschläge 62 des Rundstabs 63 und begrenzt damit die Schwenkbewegung. Je nach Länge und Dicke des Rundstabs 63 kann der Abstand zum Boden des Gehäuses 42 reduziert oder vergrößert werden, wodurch der maximale Verschwenkweg bedarfsgerecht vorgegeben werden kann.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Lenkervorrichtung (17) für eine Dreipunkt-Anhängevorrichtung (10) einer landwirtschaftlichen Maschine, mit einem über ein Schwenkgelenk verschwenkbar an einen Anbaurahmen (12) angelenkten Lenker (18), wobei der Lenker (18) wenigstens um eine Achse (24, 30) in eine erste und in eine zweite entgegen gesetzte Schwenkrichtung verschwenkbar ist, und wenigstens einem ersten Federelement, welches einenends mit dem Lenker (18) verbunden ist, **dadurch gekennzeichnet, dass** das erste Federelement anderenends ortsfest am Anbaurahmen (10) befestigt ist, wobei das erste Federelement einenends derart mit dem Lenker verbunden ist, dass ein Verschwenken des Lenkers (18) um die eine Achse (24, 30) in beide Schwenkrichtungen eine Längenänderung des Federelements hervorruft.

2. Lenkervorrichtung (17) nach Anspruch 1, **dadurch gekennzeichnet, dass** das erste Federelement als Schraubenfeder (48) ausgebildet ist, welche einenends mit dem Lenker (18) und anderenends derart mit dem Anbaurahmen (12) verbunden ist, vorzugsweise mittig zur Lenkerlängsachse, dass ein Verschwenken des Lenkers (18) um die eine Achse (24, 30) in beide Schwenkrichtungen eine Längenänderung der Schraubenfeder (48) hervorruft.

3. Lenkervorrichtung (17) nach Anspruch 1 oder 2, **dadurch gekennzeichnet, dass** das Schwenkgelenk derart ausgebildet ist, dass der Lenker (18) um eine erste Achse (30) und um eine zweite Achse (24) in jeweils eine erste und eine zweite entgegen gesetzte Schwenkrichtung verschwenkbar ist.

4. Lenkervorrichtung (17) nach einem der vorhergehenden Ansprüche, **dadurch gekennzeichnet, dass** das Schwenkgelenk einen Gabelkopf (26) umfasst, der einenends über die erste Achse (30) mit dem Lenker (18) verbunden und anderenends über die zweite Achse (24) mit einem Anbaurahmen (12) verbindbar ist.

5. Lenkervorrichtung (17) nach einem der vorhergehenden Ansprüche, **dadurch gekennzeichnet, dass** der Lenker (18) als Oberlenker ausgebildet ist, insbesondere als hydraulisch längenverstellbarer Oberlenker.

6. Lenkervorrichtung (17) nach einem der vorhergehenden Ansprüche, **dadurch gekennzeichnet, dass** das erste Federelement einenends über eine Lasche (50) mit dem Lenker (18) verbunden ist, wobei die Lasche (50) derart ausgebildet ist, dass ein erster Verbindungspunkt (53), in welchem die Lasche (50) mit dem Lenker (18) dreh- und ortsfest verbunden ist, und ein zweiter Verbindungspunkt (59), in welchem die Lasche (50) mit dem Federelement verbunden ist, vorgesehen ist und wobei die erste Achse zwischen dem ersten und dem zweiten Verbindungspunkt (53, 59) liegt.

7. Lenkervorrichtung (17) nach einem der vorhergehenden Ansprüche, **dadurch gekennzeichnet, dass** das erste Federelement einenends über eine Lasche (50) mit dem Lenker (18) verbunden ist, wobei die Lasche (50) derart ausgebildet ist, dass ein erster Verbindungspunkt (53), in welchem die Lasche (50) mit dem Lenker (18) drehbar verbunden ist, ein zweiter Verbindungspunkt (59), in welchem die Lasche (50) mit dem Federelement verbunden ist und ein dritter Verbindungspunkt (61), in welchem die Lasche (50) mit dem Schwenkgelenk drehbar verbunden ist, vorgesehen ist und wobei die erste Achse zwischen dem zweiten und dem dritten Verbindungspunkt (59, 61) liegt.

8. Lenkervorrichtung (17) nach einem der vorhergehenden Ansprüche, dass ein zweites Federelement vorgesehen ist, wobei das zweite Federelement einenends mit dem Lenker (18) und anderenends derart mit dem Schwenkgelenk verbunden ist, dass ein Verschwenken des Lenkers (18) um die erste Achse in beide Schwenkrichtungen ein Auslenken des zweiten Federelements aus seiner Neutralstellung hervorruft.

9. Lenkervorrichtung (17) nach einem der vorhergehenden Ansprüche, **dadurch gekennzeichnet, dass** am Lenker (18) oder am Schwenkgelenk Begrenzungsmittel vorgesehen sind, vorzugsweise Anschläge (62), welche den Verschwenkweg des Lenkers (18) um die erste Achse in die erste und zweite Schwenkrichtung begrenzen.

10. Dreipunkt-Anhängevorrichtung (10) einer landwirtschaftlichen Maschine, mit einem Anbaurahmen (12), **dadurch gekennzeichnet, dass** eine Lenkervorrichtung (17) nach einem der vorhergehenden Ansprüche vorgesehen ist.
